**Europäisches Patentamt**

**European Patent Office**

**Office européen des brevets**

(19)

(11) Veröffentlichungsnummer: **0 233 372**
**B1**

(12)

# EUROPÄISCHE PATENTSCHRIFT

(45) Veröffentlichungstag der Patentschrift:
**28.11.90**

(51) Int. Cl.⁵: **F01C 21/06,** F01C 21/08,
F02B 55/10

(21) Anmeldenummer: **86117937.2**

(22) Anmeldetag: **23.12.86**

(54) **Kühlsystem einer Rotationskolbenbrennkraftmaschine.**

(30) Priorität: **23.12.85 DE 3545818**

(43) Veröffentlichungstag der Anmeldung:
**26.08.87 Patentblatt 87/35**

(45) Bekanntmachung des Hinweises auf die Patenterteilung:
**28.11.90 Patentblatt 90/48**

(84) Benannte Vertragsstaaten:
**AT DE FR IT**

(56) Entgegenhaltungen:
**DE-A- 1 526 394**
**DE-A- 2 950 275**
**DE-B- 1 125 228**
**US-A- 2 472 261**

(73) Patentinhaber: **Wankel GmbH, Attilastrasse 56,
D-1000 Berlin 42(DE)**

(72) Erfinder: **Eiermann, Dankwart, Kirchstrasse 43,
D-8995 Weissensberg-West(DE)**

(74) Vertreter: **Freiherr von Welser, Hubert, Danziger
Strasse 15, D-8000 München 40(DE)**

## Beschreibung

Die Erfindung betrifft eine Flüssigkeitskühlung des oder der Exzenterlager einer Rotationskolbenbrennkraftmaschine mit einem aus einer trochoidenförmigen zweibogigen Mantellaufbahn und Seitenteilen bestehenden Gehäuse, das axial von einer Exzenterwelle durchsetzt ist, auf deren Exzenter bzw. Exzentern ein dreieckiger Kolben in ständig gleitendem Eingriff seiner Dichtteile an der Mantellaufbahn in einer Planetenbewegung umläuft und bei dem zwischen der Innenwandung eines Seitenteils und einer zur Achse der Exzenterwelle senkrechten Seitenwand des oder der Exzenter innerhalb des oder der Kolben ein Synchrongetriebe vorgesehen ist, wobei die Exzenterwelle und der oder die Exzenter einen gemeinsamen durchgehenden nach den Lager- oder Getrieberäumen abgeschlossenen, von einem Kühlmittel durchströmbaren Hohlraum aufweisen.

Bei derartigen Brennkraftmaschinen mit flüssigkeitsgekühltem Gehäuse wird üblicherweise der Kolben mit Öl gekühlt, wobei ein größerer Öldurchsatz durch die Lager- und Getrieberäume und den Innenraum des Kolbens stattfindet. Es ist daher notwendig, diese öldurchsetzten Räume von den Arbeitsräumen abzudichten, um nicht durch Verbrennen des Öls die Abgaswerte drastisch zu verschlechtern. Zu diesem Zweck sind Ölinnendichtungen vorgesehen worden, die konstruktiv aufwendig sind und immer ein Problem darstellen und auch ihre Aufgabe nicht vollständig erfüllen können. Bei im Verhältnis zum Kolbendurchmesser dicken Exzenterwellen und entsprechend großem Synchrongetriebe ist kein Raum mehr für solche Ölinnendichtungen. Bei mit Luft oder Gemisch gekühltem Kolben wird zwar diese Schwierigkeit umgangen, jedoch sind derartige Brennkraftmaschinen nicht für hohe Belastungen geeignet, da dann die Kolbenkühlung nicht für den Abtransport der entwickelten Wärme ausreicht. Zudem ergibt sich die Notwendigkeit einer Rückkühlung der durch den Kolben und Exzenter geführten Ladung, um die Minderung des Füllungsgrades zu vermeiden.

Die Kühlung des Kolbens ist notwendig, um die Verbrennungswärme nicht nur von den Dichtteilen des Kolbens, sondern vor allem von seinen Exzenterlagern abzuhalten und die dort sonst eintretenden Verkokungen des Schmieröls und die hitzebedingte Materialerweichung zu verhindern. Dies ist umso wichtiger, je höhere Leistungsanforderungen man an den Motor stellt. Die Kühlung der Dichtelemente kann zwar im wesentlichen über die Seitenwände des Gehäuses erfolgen, die Exzenterlager sind hierfür aber nicht erreichbar.

Ein Verzicht auf eine unmittelbare Kühlung des Kolbens ist bisher nicht möglich gewesen, während es andererseits wünschenswert ist, mit einfachen und billigen Konstruktionen eine hohe Belastbarkeit des Motors zu erreichen, wie sie mit Luft- oder Gemischkühlung des Kolbens nicht möglich ist. Des weiteren ist es im Hinblick auf die Abgaswerte notwendig, das Eindringen von zur Kolbenkühlung erforderlichen Öls vollständig zu vermeiden, was nur durch Verzicht auf eine solche Ölkühlung geschehen kann.

In DE-A 29 50 275 bzw. USA 2 472 261 wird vorgeschlagen, hohle Exzenterwellen durch ein Innendruckverfahren aus einem Rohr kleineren oder mit einem Preßverfahren mit Außenwerkzeugen aus einem Rohr größeren Durchmessers herzustellen, durch die Kühl- oder Schmiermittel geleitet werden können. Mit diesen Verfahren lassen sich jedoch nur in Kurven ansteigende Übergänge von der Welle zu den Exzentern ausführen, nicht jedoch zur Wellenachse senkrechte Seitenwände der Exzenter. Für die eingangs genannten Maschinen ist dies jedoch unumgänglich, da das Synchrongetriebe zwischen der Seitenwand des Exzenters und der anliegenden Gehäuseseitenwand innerhalb des Kolbens untergebracht werden muß.

Mit DE-B 11 25 228 wurde vorgeschlagen, das Exzenterlager über einen durch eine konzentrische Bohrung in der Exzenterwelle hin- und zurückgeführten Kühlmittelkreislauf zu kühlen. Im Exzenter sind zu diesem Zweck eine Mehrzahl radial und in der Nähe der Lagerfläche axial gerichtete Bohrungen verhältnismäßig geringen Querschnitts vorgesehen. Die durch diese Kanäle gegen den in ihnen herrschenden nicht unerheblichen Strömungswiderstand förderbare Ölmenge je Zeiteinheit kann nicht ausreichen, die über den Kolben aus den Verbrennungskammern geleitete Wärme abzutransportieren. Es ist daher an derselben Stelle eine weitere Kühlung des Kolbens selbst über ähnliche in ihm angelegte Kanäle vorgeschlagen, wozu noch die Kühlung durch den Drucköstrom durch das Gleitlager kommt.

Die Aufgabe der Erfindung, die sich dem gegenüberstellte, war die Entwicklung eines Kühlsystems, mit dem die Exzenterlager unabhängig von einer Kühlung des Kolbens unmittelbar von der Welle her gekühlt werden können, wobei an der Exzenterwelle und an den Exzentern keine in das Exzenterlager führende Bohrungen vorgesehen zu werden brauchen und die Exzenterwelle daher in einfacher und rationeller, für Massenfertigung geeigneter Weise hergestellt werden kann.

Diese Aufgabe wird bei den eingangs genannten Rotationskolbenbrennkraftmaschinen mit den in den Ansprüchen angegebenen Maßnahmen gelöst.

Die erfindungsgemäße Lagerkühlung macht es möglich, auf eine unmittelbare Kühlung der Kolben in herkömmlicher Weise durch Öl, Frischgas oder Luft zu verzichten. Die Kolben können aus Aluminium sein, das infolge seiner guten Wärmeleitfähigkeit die anfallende Wärme in die Seitenteile bzw. das Mittelteil ableiten kann. Die dann die Exzenterlager treffende Wärmebelastung ist jedoch dann so hoch, daß es einer Kühlung der Exzenterlager bedarf wie sie nur durch die Erfindung möglich ist.

Ausführungsbeispiele zweischeibiger die Erfindung verkörpernder Maschinen werden anhand der Zeichnungen im folgenden näher beschrieben. Es zeigen

Fig. 1 einen Axialschnitt durch eine Brennkraftmaschine mit dem erfindungsgemäßen Kühlsystem,

Fig. 2 einen axialen Teilschnitt in anderer gebrochener Ebene durch die gleiche Brennkraftmaschine wie in Fig. 1 in Vergrößerung,

Fig. 3 eine axiale Draufsicht auf einen Kolben der gleichen Brennkraftmaschine,

Fig. 4 einen radialen Teilschnitt in natürlicher Größe der gleichen Brennkraftmaschine,

Fig. 5 eine schematische Darstellung des Kühlmittelkreislaufes,

Fig. 6 einen axialen Teilschnitt der erfindungsgemäßen Brennkraftmaschine.

Die in der Zeichnung dargestellte Brennkraftmaschine ist ein Flugmotor mit zwei Scheiben, der über ein Untersetzungsgetriebe kraftschlüssig mit einem Propeller verbunden ist. Sein aus Aluminium bestehendes Gehäuse 1 weist eine linke Seitenscheibe 2, eine rechte Seitenscheibe 3, ein Mittelteil 4 und zwischen diesen Mantelteile 5 und 6 mit beschichteten Mantelaufbahnen auf. Das Gehäuse 1 ist axial durchsetzt von der Exzenterwelle 7, die in der linken Seitenscheibe 2 in einem für die Propellerzugbelastung geeigneten Doppellager 8 und in der rechten Seitenscheibe 3 in dem Lager 9 läuft. Der Abtriebszapfen ist mit 10 bezeichnet, der mit einem nicht dargestellten Untersetzungsgetriebe kraftschlüssig verbunden ist. Die Exzenterwelle weist einen linken Exzenter 11 und einen rechten Exzenter 12 auf, auf denen ein rechter Kolben 13 und ein linker Kolben 14 auf den Wälzlagern 15 und 16 umlaufen. Auf dem rechten Wellenende 17 ist ein als Schwungrad ausgebildetes Gegengewicht 18 aufgepreßt. Ein Ausgleichsgewicht 19 ist auf dem abtriebsseitigen Wellenende 20 aufgekeilt.

Die Exzenterwelle 7 ist einschließlich ihrer Exzenter 11 und 12, z. B. in einem hydraulischen Druckverfahren, hohl ausgebildet. Sie ist dadurch materialmäßig erheblich verfestigt und zugleich aber trotz ihres für die Lastaufnahme notwendigen großen Querschnittes sehr leicht und wiegt etwa ein Achtel einer gleichgroßen Exzenterwelle herkömmlicher Bauweise, was für einen Flugmotor von großer Bedeutung ist, da die Exzenterwelle das schwerste Bauteil des Motors ist.

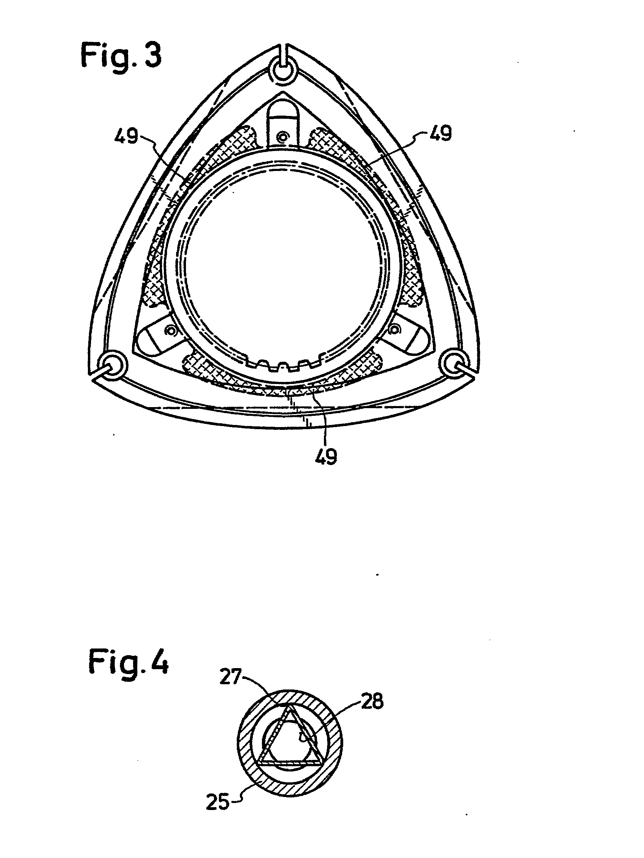

In der Exzenterwelle 7 ist an ihrem rechten Ende 17 ein Rohr 21 eingepreßt, das bis in einen inneren Gehäusedeckel 22 und einen auf diesen aufgesetzten äußeren Gehäusedeckel 23 reicht und mit der Exzenterwelle 7 umläuft. Am rechten Ende dieses Rohres 21 ist ein Flügelrad als Umwälzpumpe 24 zum Umwälzen der Kühlflüssigkeit aufgepreßt, das in dem inneren Gehäusedeckel 22 umläuft. In das Rohr 21 ist ein beiderseits offenes Zuleitungsrohr 25 für die in den Innenraum 26 der Exzenterwelle 7 zuzuführende Kühlflüssigkeit eingeschoben und durch Abstandhalter 27 befestigt. Diese sind durch Verpressen des Rohres 25 an einzelnen seiner Abschnitte auf dem Querschnitt eines gleichseitigen Dreiecks 28 gebildet, wie dies Fig. 4 in radialem Schnitt zeigt. Diese Abstanshalter sind bei 29 und 30 vorgesehen.

Der durch den inneren Gehäusedeckel 22 gebildete Raum 31, in dem das Gegengewicht 18 und Zahnräder für Zusatzantriebe, die hier ohne Bedeutung sind, umlaufen, ist gegenüber dem Raum 32 in dem äußeren Gehäusedeckel 23 durch die Wellendichtung 33 abgeschlossen. Der Raum 32 wird von dem aus dem Gehäuse 1 zurückfließenden Kühlmittel durchströmt und wird von da je nach seiner Temperatur in die Kühlmittelräume 36, 37, 38, 39, 40 in den Seitenscheiben 2 und 3, dem Mittelteil 4 und den Mantelteilen 5 und 6 oder in den Wärmetauscher durch die Umwälzpumpe zurückgefördert.

Die Umwälzpumpe 24 ist am rechten Ende des Rohres 21 im äußeren Gehäusedeckl 23 angeordnet. Sie weist auf der linken Seite große Flügel 34 für die Umwälzung des aus dem Gehäuse 1 aus dem Raum 32 zuströmenden Kühlmittels des Gehäusekühlkreislaufes auf, die in den Raum 36 gefördert werden kann. Auf ihrer rechten Seite sind an der Umwälzpumpe 24 von den Flügeln 34 durch eine Zwischenwand getrennt kleine Flügel 35 angeordnet, die über das Ende des Rohres 21 hinausragen. Mit ihnen wird das Kühlmittel aus dem Ringraum zwischen Rohr 21 und Zuleitungsrohr 25 aus dem Innenraum 26 der Exzenterwelle 7 in den Gehäusekühlmittelkreislauf nach Raum 36 zurückgefördert.

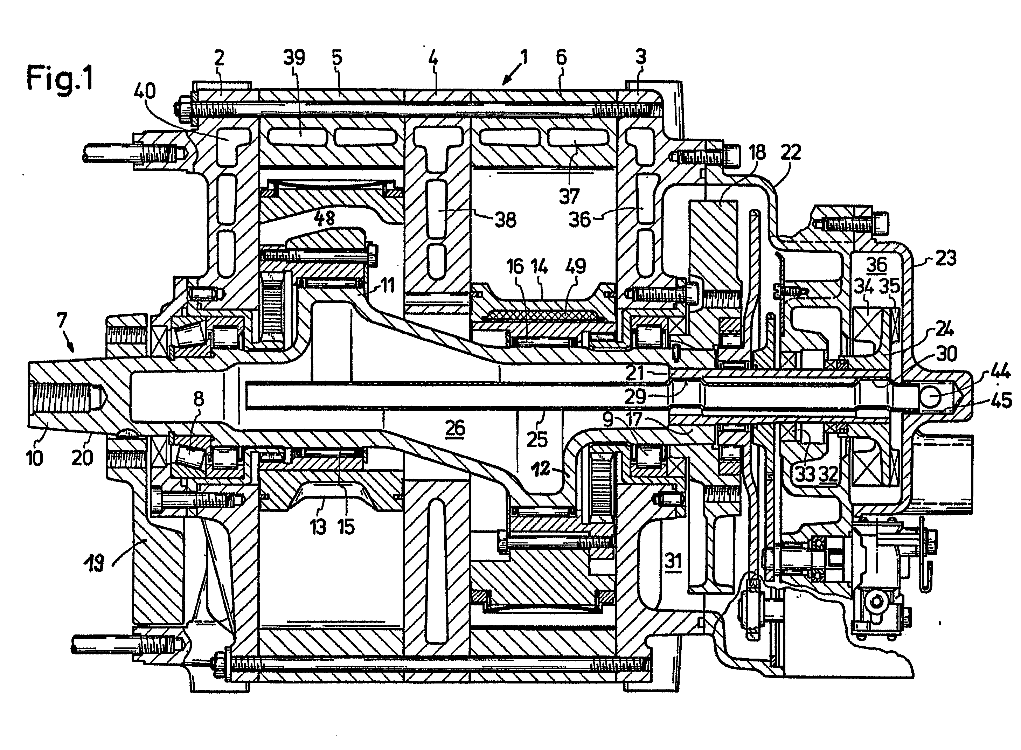

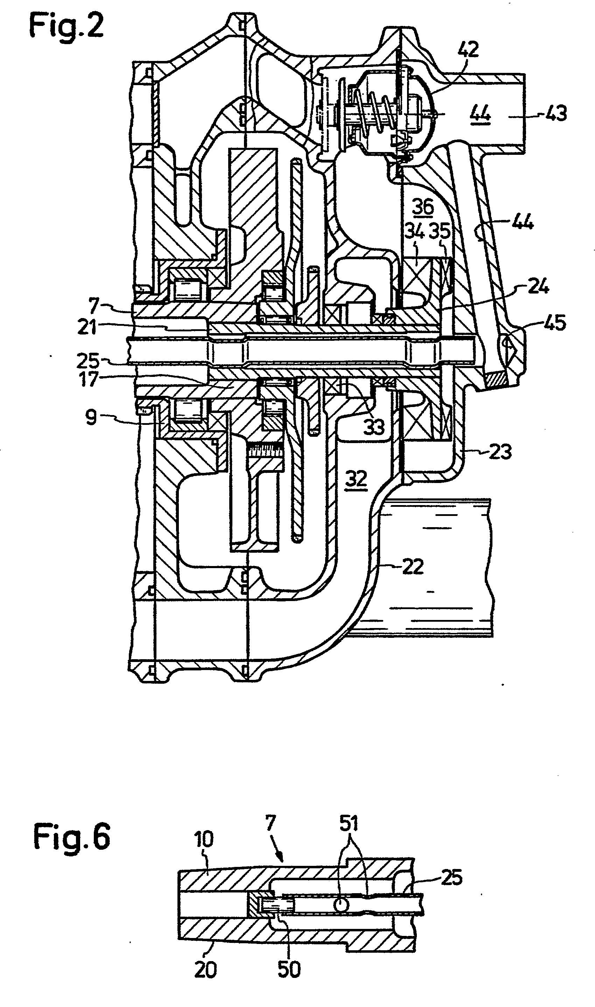

Im Kühlmittelkreislauf ist zwischen dem Raum 36 und den Kühlmittelräumen des Gehäuses 1 ein Thermostat 42 vorgesehen, der über die Zuleitung 43 mit dem in Fig.1 und 2 nicht dargestellten Wärmetauscher in Verbindung steht.

Vor dem Thermostaten 42 zweigt unmittelbar aus der Zuleitung 43 ein Zuführungsrohr 44 nach einer zur Exzenterwelle 7 koaxialen Bohrung 45 im äußeren Gehäusedeckel 23 ab, in die das offene rechte Ende des Kühlmittelzuleitungsrohres 25 ragt und dort mit engem Spalt anläuft. Zur Abdichtung kann hier ein in der Zeichnung nicht dargestelltes Rückführgewinde angeordnet sein.

Die unmittelbare Zuführung des Kühlmittels zum Innenraum 26 der Welle 7 ist deshalb sinnvoll, da einerseits hier immer ein größerer Kühlbedarf besteht, dessen Deckung durch Auslegung der Größe der kleinen Flügel 35 reguliert werden kann, und da andererseits die Brennräume von dieser Kühlung nicht berührt werden.

Das über die Zuleitung 44, die Bohrung 45 und das Kühlmittelzuleitungsrohr 25 zuströmende Kühlmittel tritt am linken Ende des Kühlmittelrohres 25 in den Innenraum 26 der Exzenterwelle 7 ein und wird von dort von der Umwälzpumpe 24 mit deren kleinen Flügeln 35 wieder wie oben beschrieben in den Kühlmittelkreislauf zurückbefördert.

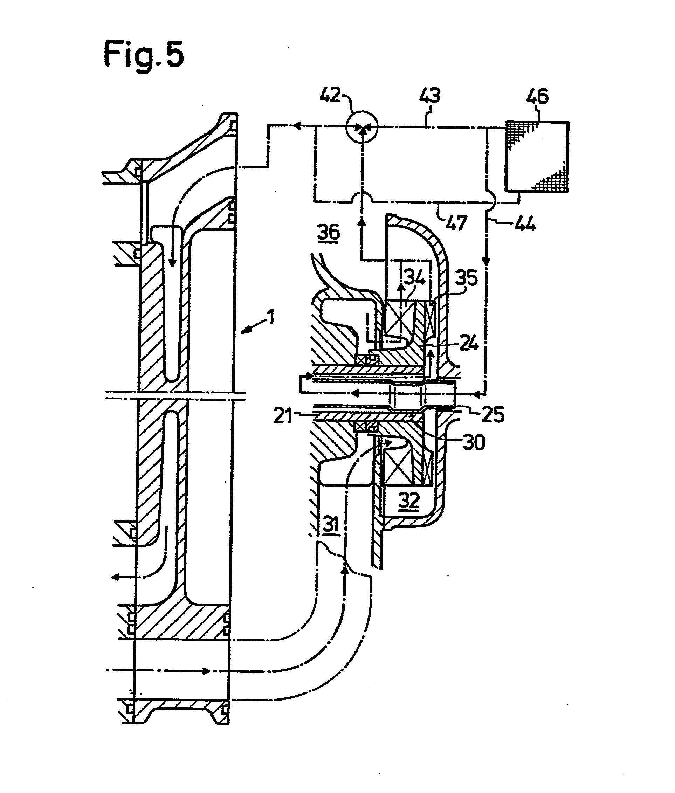

Der Kühlmittelkreislauf ist in Fig. 5 schematisch dargestellt. Das für die Kühlung des Gehäuses 1 bestimmte Kühlmittel tritt in dessen Räume 36 bis 40 vom Wärmetauscher 46 über die Leitung 47 ein und wird über die Umwälzpumpe 24 von deren großen Flügeln 34 über die Leitung 36 zum Thermostaten 42 und die Verbindungsleitung 43 zum Wärmetauscher 46 bei normalem Betrieb bzw. im Anlaufbetrieb in das Gehäuse 1 zurückgefördert. Die über den Innenraum 26 der Exzenterwelle 7 geführte Bypassleitungen des Kühlmittels führen unmittelbar vom Wärmetauscher 46 über das Zuführungsrohr 44 und das Zuleitungsrohr 25 in den Innenraum 26 der Exzenterwelle 7 und wird von dort von der Umwälzpumpe 24 mit deren kleinen Flügeln 35 zwischen dem Zuleitungsrohr 25 und dem Rohr 21 zur Leitung 36 in den Hauptkühlmittelstrom geleitet.

Durch das über diese Bypassleitung durch den Innenraum 26 der Exzenterwelle 7 geführte Kühlmittel werden vor allem die Wälzlager 15 und 16 unmittelbar gekühlt und über diese zusätzlich auch die Kolben 13 und 14.

Die Kolben 13 und 14 sind aus Aluminium, so das ein guter Wärmetransport von ihrer Seitenflächen nach den Seitenteilen 2 und 3 und dem Mittelteil 4, die vom Gehäusekühlkreislauf durchsetzt sind, erfolgen kann. Somit sind die Bereiche der Dichtelemente der Kolben keiner unzulässigen Wärmebelastung ausgesetzt. Da die Kolben, wie dies beim Kolben 14 gezeigt ist, aus vollem Material sind, ergeben sich größere Wärmeübergangsflächen von den Seitenwänden der Kolben zu denen des Gehäuses. Beim Kolben 13 ist im Gegensatz dazu ein Hohlraum 48 gezeigt, der den Zweck hat, den Wärmefluß zum Exzenterlager zu unterbrechen und nach den Seitenwänden abzuleiten und zudem Gewicht zu ersparen, was bei Flugmotoren wünschenswert ist. Die Kühlung der Wälzlager 15 und 16 erfolgt demgegenüber von dem Innenraum 26 der Exzenterwelle 7 über die Hohlräume in den Exzentern 11 und 12 her. Es kann demnach auf ein eigenes Kühlsystem für die Kolben verzichtet werden, so daß Ölübertritte in die Arbeitsräume ausgeschlossen sind.

Der größte Wärmefluß von der Kolbenmulde zum Exzenterlager erfolgt in den Kolbenstellungen vom Durchgang durch den Zündpunkt bis zur Öffnung des Auslasses. Es ist daher zweckmäßig zwischen Kolbenmulden und Exzenterlager im Kolben Ausnehmungen vorzusehen, in die Isolierkörper 49 eingesetzt werden können. Diese bestehen vorzugsweise aus Packungen schlecht wärmeleitenden keramischen körnigen Materials mit nur mehr oder minder punktförmigen Wärmeübergängen zwischen den einzelnen Körnern. Solche Einsätze sind in Fig. 1 beim Kolben 14 und in Fig. 3 gezeigt.

In der bisher beschriebenen Ausführungsform der erfindungsgemäßen Brennkraftmaschine ist das Zuleitungsrohr 25 in dem Rohr 21 mit den Abstandshaltern 27 befestigt und dreht sich daher mit der Exzenterwelle 7 mit. In der in Fig. 6 dargestellten Ausführungsform ist das Zuleitungsrohr 25 feststehend und in der Bohrung 45 im äußeren Gehäusedeckel 23 befestigt. An seinem linken Ende ist es auf einem im abtriebsseitigen Wellenende 20 der Exzenterwelle 7 feststehenden mit der Exzenterwelle axialen Zapfen 50 aus kermamischem Material mit guten Gleiteigenschaften aufgeschoben und läuft auf diesem unter Schmierung durch das Kühlmittel um. In dem Zuleitungsrohr 25 sind an dessen linken Ende Öffnungen 51 vorgesehen, aus denen das Kühlmittel in den Innenraum 26 der Exzenterwelle 7 übertritt. Die Rückführung des Kühlmittels aus dem Innenraum 26 über einen Ringraum zwischen Zuleitungsrohr 25 und der Exzenterwelle 7, wie dies beispielsweise in Fig. 2 gezeigt ist.

Bezugszeichenverzeichnis

1 Gehäuse
2 linkes Seitenteil
3 rechtes Seitenteil
4 Mittelteil
5 linke Mantellaufbahn
6 rechte Mantellaufbahn
7 Exzenterwelle
8 Doppellager in 2
9 Lager in 3
10 Abtriebszapfen
11 linker Exzenter
12 rechter Exzenter
13 linker Kolben
14 rechter Kolben
15 Wälzlager zu 13
16 Wälzlager zu 14
17 rechtes Wellenende
18 Gegengewicht
19 Ausgleichsgewicht
20 abtriebsseitiges Wellenende
21 Rohr in 7
22 innerer Gehäusedeckel
23 äußerer Gehäusedeckel
24 Umwälzpumpe
25 Zuleitungsrohr zu 7
26 Innenraum von 7
27 Abstandshalter
28 Dreieck
29,30 Lage von 27
31 Raum im inneren Gehäusedeckel 22
32 Raum im äußeren Gehäusedeckel 23
33 Wellendichtung
34 große Flügel von 24
35 kleine Flügel von 24
36 Raum vor Thermostaten
37 Raum in der rechten Seitenscheibe 3
38 Raum im rechten Mantelteil 6
39 Raum im Mittelteil 4
40 Raum im Mantelteil 5
41 Raum in der linken Seitenscheibe 2
42 Thermostat
43 Verbindungsleitung Thermostat-Wärmetauscher
44 Zuführungsrohr zu 21
45 Bohrung in 23
46 Wärmetauscher
47 Umgehungsleitung
48 Kolbenhohlraum
49 Isoliereinsätze im Kolben
50 Zapfen in 20
51 seitliche Öffnungen in 20

**Patentansprüche**

1. Flüssigkeitskühlung des oder der Exzenterlager (15, 16) einer Rotationskolbenbrennkraftmaschine mit einem aus einer trochoidenförmigen zweibogigen Mantellaufbahn (5, 6) und Seitenteilen (2,3) bestehenden Gehäuse (1), das axial von einer Exzenterwelle (7) durchsetzt ist, auf deren Exzenter bzw. Exzentern (11, 12) ein dreieckiger Kolben (13, 14) in ständig gleitendem Eingriff seiner Dichtteile an der Mantellaufbahn (5,6) in einer Planetenbewegung umläuft und bei dem zwischen der Innenwandung eines Seitenteils (2, 3) und einer zur Achse der Exzenterwelle (7) senkrechten Seitenwand des oder der Exzenter (11, 12) innerhalb des oder der Kolben (13, 14) ein Synchrongetriebe vorgesehen ist, wobei die Exzenterwelle (7) und der oder die Exzenter (11, 12) einen gemeinsamen durchgehenden nach den Lager- oder Getrieberäumen der Maschine abgeschlossenen, von einem Kühlmittel durchströmbaren Hohlraum (26) aufweisen, dadurch gekennzeichnet, daß jedes Exzenterlager (15, 16) ein Wälzlager ist und daß die Exzenterwelle (7) und der oder die Exzenter (11, 12) einen gemeinsamen Hohlkörper mit einem vollständig durchgehenden Hohlraum (26) bilden, dessen Innenwände im wesentlichen parallel zu den Außenwänden der Exzenterwelle (7) und des oder der Exzenter (11, 12) verlaufen.

2. Flüssigkeitskühlung nach Anspruch 1, dadurch gekennzeichnet, daß die Exzenterwelle (7) in einem hydraulischen Kaltumformungsverfahren hergestellt ist.

3. Flüssigkeitskühlung nach Anspruch 1 oder 2, dadurch gekennzeichnet, daß der durch den Hohlraum (26) geführte Kühlmittelkreislauf ein Bypass des Kühlmittelkreislaufes durch das Gehäuse (1-6) der Brennkraftmaschine ist.

4. Flüssigkeitskühlung nach Anspruch 1, 2, 3, dadurch gekennzeichnet, daß in den Hohlraum (26) der nach einem Ende offenen Exzenterwelle (7) ein Zuleitungsrohr (25) für das Kühlmittel vorgesehen ist, das an seinem einem Ende mit einem Zuführungsrohr (44) für das Kühlmittel in Verbindung steht und an seinem anderen Ende Öffnungen (51) aufweist.

5. Flüssigkeitskühlung nach Anspruch 4, dadurch gekennzeichnet, daß zwischen dem offenen Ende der Exzenterwelle (7) und dem Zuleitungsrohr (25) ein Ringraum für die Rückführung des Kühlmittels aus dem Innenraum (26) der Exzenterwelle (7) vorgesehen ist, der mit einer Umwälzpumpe (24) in Verbindung steht, die das Kühlmittel aus dem Hohlraum (26) in den Hauptkühlkreislauf zurückbefördert.

6. Flüssigkeitskühlung nach Anspruch 5, dadurch gekennzeichnet, daß am Ende (17) der Exzenterwelle (7) eine Umwälzpumpe (24) befestigt ist, die mit der Exzenterwelle (7) umläuft und mit großen Flügeln (34) den Hauptkühlmittelkreislauf umwälzt und mit von den großen Flügeln (34) durch eine Zwischenwand getrennten kleinen Flügeln (35) das Kühlmittel aus dem Ringraum zwischen Zuleitungsrohr (25) und Ende (17,21) der Exzenterwelle (7) aus deren Hohlraum (26) in den Hauptkühlmittelkreislauf zurückbefördert.

7. Flüssigkeitskühlung nach Anspruch 4, 5, 6, dadurch gekennzeichnet, daß das Zuleitungsrohr (25) mit der Exzenterwelle (7) umläuft und in ihr durch Abstandhalter (27) unter Bildung eines Ringraumes im Ende (17, 21) der Exzenterwelle (7) befestigt ist.

8. Flüssigkeitskühlung nach Anspruch 7, dadurch gekennzeichnet, daß die Abstandhalter (27) durch stellenweises Verpressen des Zuleitungsrohres (25) auf einen dreieckigen Querschnitt gebildet sind.

9. Flüssigkeitskühlung nach Anspruch 4, 5, 6, dadurch gekennzeichnet, daß das Zuleitungsrohr (25) in einem Gehäusedeckel (23) in einer Bohrung (45) für das Kühlmittel mündet.

10. Flüssigkeitskühlung nach Anspruch 1, dadurch gekennzeichnet, daß die Kolben (13, 14) aus Aluminium bestehen und keinen von einem Kühlmittel durchströmten Raum aufweisen.

11. Flüssigkeitskühlung nach Anspruch 1, 10, dadurch gekennzeichnet, daß im Bereich der Mulden der Kolben (13, 14) Isoliereinsätze (49) vorgesehen sind.

## Claims

1. Liquid cooling system of the eccentric bearing or bearings (15, 16) of a rotary piston internal combustion engine comprising a housing (1) having a two-lobed peripheral running surface (5, 6) and side-walls (2, 3), and having an axial eccentric shaft (7) with a three-cornered piston (13, 14) rotating on an eccentric or eccentrics (11, 12) respectively in a planetary movement with its sealing portions in continuous sliding engagement with the peripheral running surface (5, 6) and in which between the inner side of a side-wall (2, 3) and a side-wall of the eccentric or eccentrics (11, 12) inside the piston or pistons (13, 14) in a plane which is perpendicular to the axis of the eccentric shaft (7) adjacent to a corresponding phase gear drive lies, the eccentric shaft (7) and the eccentric or eccentrics (11, 12) having in common a cavity (26) with a colling fluid flowing through the cavity, and closed to bearing and gear drive chambers of the engine, characterized that each of the eccentric bearings (15, 16) is an antifriction bearing and that the eccentric shaft (7) and the eccentric or eccentrics (11, 12) form a hollow body together with a completely continuous cavity (26), having an internal contour which is substantially parallel to the external contour of the eccentric shaft (7) and the eccentric or eccentrics (11, 12).

2. Liquid cooling system according to claim 1, characterized that the eccentric shaft (7) has been formed by an hydraulic cold transformation process.

3. Liquid cooling system according to claim 1, 2, characterized that the coolant circuit leading through the cavity (26) is a bypass of the coolant circuit of the housing (1-6) of the internal combustion engine.

4. Liquid cooling system according to claim 1, 2, 3, characterized that an inlet tube (25) for the coolant is provided into the cavity (26) in an open and of the eccentric shaft (7), one end of the inlet tube communicating with a supply pipe (44) for the coolant and the other end of the inlet tube has openings (51).

5. Liquid cooling system according to claim 4, characterized that there is an annular space provided between the inlet tube and the open end of the eccentric shaft (7) and the supply tube (25) for the return flow of coolant from the cavity in the hollow interior of the eccentric shaft (7) this annular space being in communication with a circulating pump (24) which returns the coolant from the cavity (26) back to the main coolant circuit.

6. A liquid cooling system according to claim 5, characterized that the circulating pump (24) is secured on the end (17) of the eccentric shaft (7) and rotates with the eccentric shaft (7) and has large vanes (34) by an intermediate wall and returns the coolant from the cavity (26) in the interior of the shaft to the main coolant curcuit via the annular space between the inlet tube (25) and the end (17, 21) of the eccentric shaft (7).

7. A liquid cooling system according to claim 4, 5, 6, characterized that the inlet tube (25) rotates with the eccentric shaft (7) by spacing supports (27) which form the annular space between the tube and the end of the shaft.

8. A liquid cooling system according to claim 7, characterized that the spacing supports (27) are formed by intermittent deformation of the inlet tube (25) to a triangular cross-section.

9. A liquid cooling system according to claim 4, 5, 6, characterized that the inlet tube (25) leads into a bore (45) in a cover plate (23) for the coolant.

10. A liquid cooling system according to claim 1, characterized that the pistons (13, 14) consist of aluminium and have no space which coolant is leading through.

11. Liquid cooling system according to claim 1, 10, characterized that insulating inserts (49) are provided in the area of the hollows of the piston (13, 14).

## Revendications

1. Système de refroidissement du ou des paliers d'excentrique (15, 16) d'un moteur à combustion interne à piston rotatif comportant un carter (1), constitué d'une trajectoire d'enveloppe (5, 6) bi-arquée à trochoïdes et de parties latérales (2, 3), lequel carter est traversé axialement par un arbre d'excentrique (7) sur le ou les excentrique(s) (11, 12) duquel un piston (13, 14) triangulaire dont les parties d'étanchéité sont continuellement en prise avec la trajectoire d'enveloppe (5, 6), tourne dans un mouvement planétaire et pour lequel on prévoit un mécanisme de synchronisation, entre la paroi intérieure d'une partie latérale (2, 3) et une paroi latérale, perpendiculaire à l'axe de l'arbre d'excentrique (7), du ou des excentrique(s) (11, 12) à l'intérieur du ou des piston(s) (13, 14), l'arbre d'excentrique (7) et le ou les excentrique(s) (11, 12) présentent une cavité (26) commune, continue, fermée vis à vis des volumes de paliers ou d'engrenages du moteur, pouvant être traversée par un réfrigérant, caractérisé en ce que chaque palier d'excentrique (15, 16) est un roulement et en ce que l'arbre d'excentrique (7) et le ou les excentrique(s) (11, 12) forment un corps creux commun avec une cavité (26) totalement continue, dont les parois intérieures sont sensiblement parallèles aux parois extérieures de l'arbre d'excentrique (7) et du ou des excentrique(s) (11, 12).

2. Système de refroidissement selon la revendication 1, caractérisé en ce que l'arbre d'excentrique (7) est fabriqué par un procédé hydraulique de formage à froid.

3. Système de refroidissement selon les revendications 1, 2, caractérisé en ce que le circuit de réfrigérant, traversant la cavité (26), est une dérivation du circuit de réfrigérant, traversant le carter (1 - 6) du moteur à combustion interne.

4. Système de refroidissement selon les revendications 1, 2, 3, caractérisé en ce qu'on prévoit, dans la cavité (26) de l'arbre d'excentrique (7) ouvert à une extrémité, un tube d'arrivée (25) pour le réfrigérant qui, à l'une des ses extrémités, communique avec un tube d'amenée (44) du réfrigérant et qui, à son autre extrémité, présente des orifices (51).

5. Système de refroidissement selon la revendication 4, caractérisé en ce qu'on prévoit, entre l'extrémité ouverte de l'arbre d'excentrique (7) et le tube d'arrivée (25), un espace annulaire pour le retour du réfrigérant à partir du volume intérieur (26) de l'arbre d'excentrique (7), lequel espace annulaire est en liaison avec une pompe de circulation (24) qui refoule le réfrigérant, depuis la cavité (26) vers le circuit de refroidissement principal.

6. Système de refroidissement selon la revendication 5, caractérisé en ce qu'on fixe à l'extrémité (17) de l'arbre d'excentrique (7), une pompe de circulation (24) qui tourne avec l'arbre d'excentrique (7) et qui assure la circulation dans le circuit de refroidissement principal, par de grandes pales (34) et qui, avec de petites pales (35), séparées des grandes pales (34) par une cloison, refoule le réfrigérant depuis l'espace annulaire, compris entre le tube d'arrivée (25) et l'extrémité (17, 21) de l'arbre d'excentrique (7), depuis la cavité (26) de ce dernier, vers le circuit de refroidissement principal.

7. Système de refroidissement selon les revendications 4, 5, 6, caractérisé en ce que le tube d'arrivée (25) tourne avec l'arbre d'excentrique (7) et est fixé dans celui-ci, par des écarteurs (27), en formant un espace annulaire dans l'extrémité (17, 21) de l'arbre d'excentrique (7).

8. Système de refroidissement selon la revendication 7, caractérisé en ce que les écarteurs (27) sont formés par pressage, par endroits, du tube d'arrivée (25) pour prendre une forme triangulaire en section.

9. Système de refroidissement selon les revendications 4, 5, 6, caractérisé en ce que le tube d'arrivée (25) débouche dans un couvercle de carter (23), dans un perçage (45) destiné au réfrigérant.

10. Système de refroidissement selon la revendication 1, caractérisé en ce que les pistons (13, 14) sont en aluminium et ne présentent pas de volume traversé par un réfrigérant.

11. Système de refroidissement selon les revendications 1, 10, caractérisé en ce qu'on prévoit des garnitures isolantes (49), dans la région des gorges des pistons (13, 14).

Fig.1

EP 0 233 372 B1

Fig.2

42

44 — 43

44

36
34 35

24

7
21

25
17

9

33

32

23

22

45

Fig.6

10    7    51

25

20    50

## Fig. 3

## Fig. 4

# Fig.5